# EUROPEAN PATENT SPECIFICATION

(11) **EP 1 277 794 B1**
(45) Date of publication and mention of the grant of the patent: **06.04.2005**
(21) Application number: 02014870.6
(22) Date of filing: 04.07.2002
(51) Int. Cl.: C08K 5/52, C08L 23/10

(54) **Flame-retardant resin composition**
Flammhemmende Harzmischung
Composition ignifuge de résine

(30) Priority: 17.07.2001 JP 2001216397
(43) Date of publication of application: 22.01.2003
(73) Proprietor: ASAHI DENKA KOGYO KABUSHIKI KAISHA, Arakawa-ku Tokyo 116 (JP)
(72) Inventor: Kimura, Ryoji, Asahi Denka Kogyo K. K., Saitama-shi, Saitama (JP); Matsuzaka, Nobuo, Asahi Denka Kogyo K. K., Saitama-shi, Saitama (JP); Nakajima, Toshio, Asahi Denka Kogyo K. K., Saitama-shi, Saitama (JP); Yamaki, Akihiro, Asahi Denka Kogyo K. K., Saitama-shi, Saitama (JP); Murase, Hisashi, Asahi Denka Kogyo K. K., Saitama-shi, Saitama (JP)
(74) Representative: Forstmeyer, Dietmar, Dr. rer. nat., Dipl.-Chem.

(56) References cited:
- EP-A- 0 849 260
- EP-A- 1 120 441
- US-A- 4 599 375
- US-A- 6 117 542
- PATENT ABSTRACTS OF JAPAN vol. 1998, no. 01, 30 January 1998 (1998-01-30) & JP 09 235407 A (CHISSO CORP), 9 September 1997 (1997-09-09)

## Description

### FIELD OF THE INVENTION

The present invention relates to a resin composition which has excellent flame retardancy and generates almost no toxic gas on combustion. More particularly, it relates to a flame-retardant resin composition containing a specific phosphoric acid salt and an anti-dripping agent, which exhibits excellent flame retardancy with a small amount of a flame retardant without using a halogen-based flame retardant involving toxic gas emission on combustion.

### BACKGROUND OF THE INVENTION

Synthetic resins have been widely used as constructive materials, automobile parts, packaging materials, agricultural materials, housing materials for appliances, toys, and the like because of their excellent chemical and mechanical characteristics. However, most synthetic resins are combustible and need flame retardation treatment for some applications. It is well known that flame retardation is achieved by addition of one or more of halogen flame retardants, inorganic phosphorus flame retardants typified by red phosphorus and polyphosphoric acid compounds such as ammonium polyphosphate, organic phosphorus flame retardants such as triarylphosphoric ester compounds, metal hydroxides, a flame retardation assistant, e.g., antimony oxide and melamine compounds.

Since halogen flame retardants involve evolution of toxic gases on combustion, it has been attempted to replace them with phosphorus flame retardants that generate almost no toxic gas.

For example, JP-A-8-176343 discloses a flame-retardant synthetic resin composition containing ammonium polyphosphate, a polyhydroxy compound, a triazine ring-containing compound, and a metal hydroxide. U.S. Patents 3,936,416 and 4,010,137 disclose a flame-retardant synthetic resin composition containing melamine polyphosphate and penta- to tripentaerythritol. JP-A-11-152402 proposes a flame-retardant synthetic resin composition containing polybutylene terephthalate (PBT), melamine pyrophosphate, and an aromatic phosphate oligomer. U.S. Patents 4,278,591 and 5,618,865 mention that melamine pyrophosphate and other phosphorus compounds are effective for rendering polymers such as PBT flame-retardant. U.S. Patent 4,599,375 discloses a flame-retardant synthetic resin composition comprising (a) a synthetic resin, (b) piperazine pyrophosphate, (c) melamine pyrophosphate, and (d) titanium oxide or silicon dioxide. However, the flame retarding effects achieved by these conventional flame retardant systems are still insufficient, and it has been desired to develop a flame retardant which, at a reduced amount, imparts high flame retardancy to synthetic resins.

**EP-A-1120441** discloses blends of polypropylene, ethylene diamine phosphate coated with melamine and melamine phosphate (IV). The addition of PTFE as drip preventing agent is described as well but the amount of drip preventing agent is not disclosed.

**EP-A-849260** describes compositions of polypropylene and a mixed melamine piperazine phosphoric salt

**US-A-4599375** describes flame retardant polypropylene compositions of melamine phosphate and piperazine pyrophosphate, TiO₂ and SiO₂.

**JP-A-91235407** describes compositions of mixed piperazine/diamine and triazine salts of phosphoric acid and ammonium phosphate.

### SUMMARY OF THE INVENTION

An object of the present invention is to provide a flame-retardant resin composition with exhibits excellent flame retardancy with the aid of a small amount of a flame retardant and suppresses evolution of toxic gas on combustion.

In the light of the above-described circumstances, the present inventors have conducted extensive investigation and found as a result that addition of a phosphoric acid salt with a specific structure provides a resin composition having excellent flame retardancy. The present invention has been reached based on this finding.

The present invention provides a flame-retardant resin composition comprising
(A) a synthetic resin, selected from the group consisting of polyolefins resins, linear polyesters and polyurethanes (B) (b1) a compound represented by formula (I) or (b2) a combination of a compound represented by formula (III) and a compound represented by formula (IV), and (C) fluorine resin 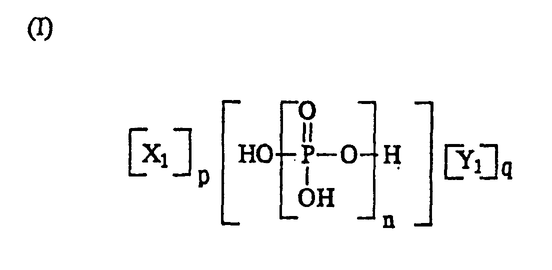
wherein n represents an integer of from 1 to 100; X₁ represents R₁R₂N(CH₂)ₘNR₃R₄, piperazine or a piperazine ring-containing diamine; R₁, R₂, R₃, and R₄, which may be the same or different, each represent a hydrogen atom or a straight-chain or branched alkyl group having 1 to 5 carbon atoms; m represents an integer of from 1 to 10; Y₁ represents an ammonia or a triazine derivative represented by formula (II); and p and q each represent a number satisfying relationships: 0<p≤n+2, 0<q≤n+2, and 0<p+q≤n+2. 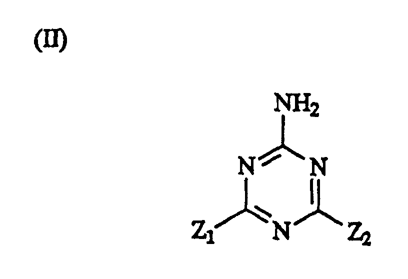 wherein Z₁ and Z₂, which may be the same or different, each represent an -NR₅R₆ group (wherein R₅ and R₆, which may be the same or different, each represent a hydrogen atom or a straight-chain or branched alkyl group having 1 to 6 carbon atoms or a methylol group), a hydroxyl group, a mercapto group, a straight-chain or branched alkyl group having 1 to 10 carbon atoms, a straight-chain or branched alkoxy group having 1 to 10 carbon atoms, a phenyl group or a vinyl group. 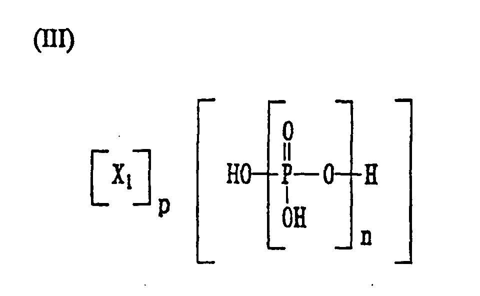 wherein X₁, p and n are as defined above. 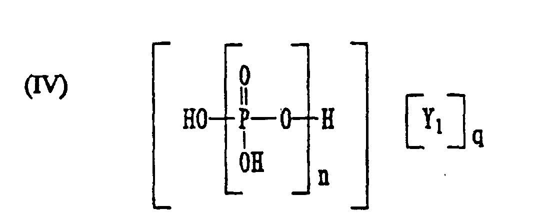 wherein Y₁, q, and n are as defined above, and wherein by weight the flame retardant resin composition comprises 5 to 70 parts of component (B) and 0.05 to 5 parts by weight of component (C) per 100 parts by weight of component (A).

Compounding a reduced amount of a specific phosphoric acid salt and an anti-dripping agent to a resin provides a resin composition which possesses excellent flame retardancy without a halogen-based flame retardant that evolves toxic gas on combustion.

### DETAILED DESCRIPTION OF THE INVENTION

The synthetic resin which can be used as component (A) includes thermoplastic resins and thermosetting resins. The thermoplastic resins include polyolefin resins, such as α-olefin homopolymers, e.g., polypropylene, high-density polyethylene, low-density polyethylene, linear low-density polyethylene, polybutene, and poly-3-methylpentene, olefin copolymers, e.g., ethylene-vinyl acetate copolymers and ethylene-propylene copolymers, and copolymers of these polyolefin resins; linear polyesters such as polyethylene terephthalate and polybutylene terephthalate, polyurethane and polyblends thereof. Of these resins, polyolefin resins which are difficult to make flame-retardant, particularly polypropylene resins and polyethylene resins, are suitable as a resin to which the specific phosphoric acid salt and the anti-dripping agent of the present invention are added to provide flame-retardant resin compositions.

The flame retardation technique according to the present invention is effective on any of the synthetic resins recited above, with the effects manifested somewhat varying depending on the density, softening point, solvent-insoluble content, and stereospecificity of the resin, whether or how much a catalyst residue remains in the resin, the kind and the polymerization ratio of starting olefins, the kind of a polymerization catalyst used (e.g., a Lewis acid catalyst or a metallocene catalyst), and so forth.

In the phosphoric acid salt represented by formula (I), the alkyl group represented by R₁, R₂, R₃, and R₄ includes methyl, ethyl, propyl, isopropyl, butyl, sec-butyl, t-butyl, and pentyl.

The phosphoric acid salt of formula (I) is a phosphoric acid amine salt obtained from (a) a diamine, (b) ammonia or a triazine derivative, and (c) orthophosphoric acid or a polyphosphoric acid. The phosphoric acid amine salt (I) can be prepared, for example, as follows. A predetermined amount of orothophosphoric acid or a condensed phosphoric acid having a degree of condensation of 2 to about 100 is put into a reaction vessel with or without an inert solvent. A diamine represented by formula R₁R₂N(CH₂)ₘNR₃R₄ (wherein R₁, R₂, R₃, and R₄, which may be the same or different, each represent a hydrogen atom or a straight-chain or branched alkyl group having 1 to 5 carbon atoms; and m is an integer of 1 to 10), piperazine or a piperazine ring-containing diamine (hereinafter inclusively referred to as a diamine) is added thereto either directly or as diluted with water, etc. and allowed to react at -10 to 100°C. The reaction is a neutralization reaction, which proceeds rapidly. To the intermediate product, either isolated or as produced, ammonia or a triazine derivative represented by formula (II) is added thereto either directly or as diluted with water, etc. The reaction mixture is allowed to react under heating to produce a desired phosphoric acid amine salt. The amounts of the diamine and ammonia or the triazine derivative participating in the reaction are subject to variation according to the phosphorus concentration of the orthophosphoric acid or condensed phosphoric acid used. That is, the diamine is used in an amount of a smaller mole number than a half of the number of the hydroxyl groups present in the orthophosphoric acid or condensed phosphoric acid, preferably in an approximately equimolar amount to the orthophosphoric acid or condensed phosphoric acid. The ammonia or triazine derivative is then added to the resulting intermediate product in an amount equivalent to the hydroxyl groups remaining in the intermediate product.

Examples of the diamine are N,N,N',N'-tetramethyldiaminomethane, ethylenediamine, N,N'-dimethylethylenediamine, N,N'-diethylethylenediamine, N,N-dimethylethylenediamine, N,N-diethylethylenediamine, N,N,N',N'-tetramethylethylenediamine, N,N,N',N'-diethylethylenediamine, 1,2-propanediamine, 1,3-propanediamine, tetramethylenediamine, pentamethylenediamine, hexamethylenediamine, 1,7-diaminoheptane, 1,8-diaminooctane, 1,9-diaminononane, 1,10-diaminodecane, piperazine, *trans*-2,5-dimethylpiperazine, 1,4-bis(2-aminoethyl)piperazine, and 1,4-bis(3-aminopropyl)piperazine. All of these diamine compounds are commercially available, which can be utilized in the invention.

Examples of the triazine derivative of formula (II) are melamine, acetoguanamine, benzoguanamine, acrylguanamine, 2,4-diamino-6-nonyl-1,3,5-triazine, 2,4-diamino-6-hydroxy-1,3,5-triazine, 2-amino-4,6-dihydroxyl-1,3,5-triazine, 2,4-diamino-6-methoxy-1,3,5-triazine, 2,4-diamino-6-ethoxy-1,3,5-triazine, 2,4-diamino-6-propoxy-1,3,5-triazine, 2,4-diamino-6-isopropoxy-1,3,5-triazine, 2,4-diamino-6-mercapto-1,3,5-triazine, and 2-amino-4,6-dimercapto-1,3,5-triazine. All of these triazine derivatives are commercially available, which can be made use of in the invention.

The phosphoric acid salt represented by formula (III) preferably includes salts formed between a phosphoric acid and piperazine. The piperazine salt, for example, piperazine pyrophosphate is easily obtained by allowing piperazine and pyrophosphoric acid in water or an aqueous methanol solution and collecting the salt as a sparingly water soluble precipitate. The phosphoric acid piperazine salts include piperazine orthophosphate, piperazine pyrophosphate, and other piperazine polyphosphates. The polyphosphoric acids used to prepare piperazine polyphosphates are not particularly limited in phosphoric acid composition. That is, the polyphosphoric acid may be a mixture of orthophosphoric acid, pyrophosphoric acid, triphosphoric acid, and other polyphosphoric acids.

The phosphoric acid salt represented by formula (IV) preferably includes salts formed between a phosphoric acid and melamine. Phosphoric acid melamine salts, for example, melamine pyrophosphate can be prepared by allowing sodium pyrophosphate and melamine to react in an arbitrary ratio in the presence of hydrochloric acid and neutralizing the reaction mixture with sodium hydroxide. The melamine phosphate which is preferably used in the invention includes melamine orthophosphate, melamine pyrophosphate, and other melamine polyphosphates.

It is preferred for the phosphoric acid salt as component (B) to have an average particle size of 40 µm or smaller, particularly 10 µm or smaller. Component (B) with an average particle size greater than 40 µm not only tends to have poor dispersibility in the resin (A), failing to manifest high flame retardancy but can reduce the mechanical strength of molded articles prepared from the resulting resin composition.

Component (B) is used in an amount of 5 to 70 parts, particularly 10 to 50 parts, especially 15 to 40 parts, by weight per 100 parts by weight of the resin as component (A). A proportion less than 5 parts of component (B) tends to fail to produce sufficient flame retarding effect. A proportion of component (B) exceeding 70 parts may reduce the characteristics of the resin.

The phosphoric acid salt of formula (III) and the phosphoric acid salt of formula (IV) are preferably combined in a weight ratio, (III)/(IV), of from 40/60 to 80/20, particularly from 50/50 to 70/30.

In order to prevent dripping on combustion, the flame-retardant resin composition of the present invention essentially contains a known anti-dripping agent as component (C). Suitable anti-dripping agents are fluorine resins, such as polytetrafluoroethylene, polyvinylidene fluoride, and polyhexafluoropropylene. These anti-dripping agents can be used either individually or as a combination of two or more thereof. Particularly preferred of them is polytetrafluoroethylene (PTFE) for its high non-dripping effect.

The anti-dripping agent is used in an amount of 0.05 to 5 parts, particularly 0.1 to 2 parts, by weight per 100 parts by weight of the resin. An amount less than 0.05 part produces only a small non-dripping effect. A resin composition containing greater than 5 parts of the anti-dripping agent tends to undergo appreciable thermal shrinkage on molding only to provide molded articles with reduced dimensional precision.

If desired, the flame-retardant resin composition of the present invention can be stabilized by addition of a phenol antioxidant, a phosphorus antioxidant, a thio-ether antioxidant, an ultraviolet absorber, a hindered amine light stabilizers, and the like.

Useful phenol antioxidants include 2,6-di-t-butyl-p-cresol, 2,6-diphenyl-4-octadecyloxyphenol, distearyl(3,5-di-t-butyl-4-hydroxybenzyl) phosphonate, 1,6-hexamethylenebis[(3,5-di-t-butyl-4-hydroxyphenyl)propionamide], 4,4'-thiobis(6-t-butyl-m-cresol), 2,2'-methylenebis(4-ethyl-6-t-butylphenol), 2,2'-methylenebis(4-ethyl-6-t-butylphenol), 4,4'-butylidenebis(6-t-butyl-m-cresol), 2,2'-ethylidenebis(4,6-di-t-butylphenol), 2,2'-ethylidenebis(4-sec-butyl-6-t-butylphenol), 1,1,3-tris(2-methyl-4-hydroxy-5-t-butylphenyl)butane,1,3,5-tris(2,6-dimethyl-3-hydroxy-4-t-butylbenzyl) isocyanurate, 1,3,5-tris(3,5-di-t-butyl-4-hydroxybenzyl) isocyanurate, 1,3,5-tris(3,5-di-t-butyl-4-hydroxybenzyl)-2,4,6-trimethylbenzene, 2-t-butyl-4-methyl-6-(2-acryloyloxy-3-t-butyl-5-methylbenzyl)phenol, stearyl 3,5-di-t-butyl-4-hydroxyphenylpropionate, tetrakis[methyl 3-(3,5-di-t-butyl-4-hydroxyphenyl)propionate]methane, thiodiethylene glycol bis(3,5-di-t-butyl-4-hydroxyphenylpropionate), 1,6-hexamethylenebis(3,5-di-t-butyl-4-hydroxyphenylpropionate), bis[3,3-di(4-hydroxy-3-t-butylphenyl)butyric acid] glycol ester, bis[2-t-butyl-4-methyl-6-(2-hydroxy-3-t-butyl-5-methylbenzyl)phenyl] terephthalate, 1,3,5-tris[(3,5-di-t-butyl-4-hydroxyphenyl)propionyloxyethyl] isocyanurate, 3,9-bis[1,1-dimethyl-2-{(3-t-butyl-4-hydroxy-5-methylphenyl)-propionyloxy}ethyl]-2,4,8,10-tetraoxaspiro[5,5]undecane, and triethylene glycol bis(3-t-butyl-4-hydroxy-5-methylphenylpropionate). The phenol antioxidant is usually added in an amount of 0.001 to 10 parts, preferably 0.05 to 5 parts, by weight per 100 parts by weight of the resin.

Useful phosphorus antioxidants include trisnonylphenyl phosphite, tris[2-t-butyl-4-(3-t-butyl-4-hydroxy-5-methylphenylthio)-5-methylphenyl] phosphite, tridecyl phosphite, octyldiphenyl phosphite, di(decyl)monophenyl phosphite, di(tridecyl)pentaerythritol diphosphite, di(nonylphenyl)pentaerythritol diphosphite, bis(2,4-di-t-butylphenyl)pentaerythritol diphosphite, bis(2,6-di-t-butyl-4-methylphenyl)pentaerythritol diphosphite, bis(2,4,6-tri-t-butylphenyl)pentaerythritol diphosphite, bis(2,4-dicumylphenyl)pentaerythritol diphosphite, tetra(tridecyl)-isopropylidenediphenol diphosphite, tetra(tridecyl)-4,4'-n-butylidenebis(2-t-butyl-5-methylphenol) diphosphite, hexa(tridecyl)-1,1,3-tris(2-methyl-4-hydroxy-5-t-butylphenyl)butane triphosphite, tetrakis(2,4-di-t-butylphenyl)biphenylene diphosphonite, 9,10-dihydro-9-oxa-10-phosphaphenanthrene-10-oxide, 2,2'-methylenebis(4,6-t-butylphenyl)-2-ethylhexyl phosphite, 2,2'-methylenebis(4,6-t-butylphenyl)-octadecyl phosphite, 2,2'-ethylidenebis(4,6-di-t-butylphenyl) fluorophosphite tris(2-[(2,4,8,10-tetrakis-t-butyldibenzo[d,f][1,3,2]-dioxaphosphepin-6-yl)oxy]ethyl)amine, and a phosphite of 2-ethyl-2-butylpropylene glycol and 2,4,6-tri-t-butylphenol. The phosphorus antioxidant is usually used in an amount of 0.001 to 10 parts by weight, preferably 0.05 to 5 parts by weight, per 100 parts by weight of the resin.

Examples of useful thio-ether antioxidants include dialkyl thiodipropionates, such as dilauryl thiodipropionate, dimyristyl thiodipropionate, and distearyl thiodipropionate; and pentaerythritol tetra(β-alkylmercapto)propionic acid esters. The thio-ether antioxidant is usually added in an amount of 0.001 to 10 parts by weight, preferably 0.05 to 5 parts by weight, per 100 parts by weight of the resin.

Useful ultraviolet absorbers include 2-hydroxybenzophenones, such as 2,4-dihydroxybenzophenone, 2-hydroxy-4-methoxybenzophenone, 2-hydroxy-4-octoxybenzophenone, and 5,5'-methylenebis(2-hydroxy-4-methoxybenzophenone); 2-(2'-hydroxyphenyl)benzotriazoles, such as 2-(2'-hydroxy-5'-methylphenyl)benzotriazole, 2-(2'-hydroxy-3',5'-di-t-butylphenyl)-5-chlorobenzotriazole, 2-(2'-hydroxy-3'-t-butyl-5'-methylphenyl)-5-chlorobenzotriazole, 2-(2'-hydroxy-5'-t-octylphenyl)benzotriazole, 2-(2'-hydroxy-3',5'-dicumylphenyl)benzotriazole, 2,2'-methylenebis(4-t-octyl-6-(benzotriazolyl)phenol), and 2-(2'-hydroxy-3'-t-butyl-5'-carboxyphenyl)benzotriazole; benzoates, such as phenyl salicylate, resorcinol monobenzoate, 2,4-di-t-butylphenyl 3,5-di-t-butyl-4-hydroxybenzoate, 2,4-di-t-amylphenyl 3,5-di-t-butyl-4-hydroxybenzoate, and hexadecyl 3,5-di-t-butyl-4-hydroxybenzoate; substituted oxanilides, such as 2-ethyl-2'-ethoxyoxanilide and 2-ethoxy-4'-dodecyloxanilide; cyanoacrylates, such as ethyl α-cyano-β,β-diphenylacrylate and methyl 2-cyano-3-methyl-3-(p-methoxyphenyl)acrylate; and triaryltriazines, such as 2-(2-hydroxy-4-octoxyphenyl)-4,6-bis(2,4-di-t-butylphenyl)-s-triazine, 2-(2-hydroxy-4-methoxyphenyl)-4,6-diphenyl-s-triazine, and 2-(2-hydroxy-4-propoxy-5-methylphenyl)-4,6-bis(2,4-di-t-butylphenyl)-s-triazine. The ultraviolet absorber is usually added in an amount of 0.001 to 30 parts, preferably 0.05 to 10 parts, by weight per 100 parts by weight of the resin.

Examples of suitable hindered amine light stabilizers include 2,2,6,6-tetramethyl-4-piperidyl stearate, 1,2,2,6,6-pentamethyl-4-piperidyl stearate, 2,2,6,6-tetramethyl-4-piperidyl benzoate, bis(2,2,6,6-tetramethyl-4-piperidyl) sebacate, bis(1,2,2,6,6-tetramethyl-4-piperidyl) sebacate, bis(1-octoxy-2,2,6,6-tetramethyl-4-piperidyl) sebacate, tetrakis(2,2,6,6-tetramethyl-4-piperidyl) 1,2,3,4-butanetetracarboxylate, tetrakis(1,2,2,6,6-pentamethyl-4-piperidyl) 1,2,3,4-butanetetracarboxylate, bis(2,2,6,6-tetramethyl-4-piperidyl)di(tridecyl) 1,2,3,4-butanetetracarboxylate, bis(1,2,2,6,6-pentamethyl-4-piperidyl)di(tridecyl)-1,2,3,4-butanetetracarboxylate, bis(1,2,2,4,4-pentamethyl-4-piperidyl)-2-butyl-2-(3,5-di-t-butyl-4-hydroxybenzyl)malonate, 1-(2-hydroxyethyl)-2,2,6,6-tetramethyl-4-piperidinol/diethyl succinate polycondensates, 1,6-bis(2,2,6,6-tetramethyl-4-piperidylamino)hexane/2,4-dichloro-6-morpholino-s-triazine polycondensates, 1,6-bis(2,2,6,6-tetramethyl-4-piperidylamino)hexane/2,4-dichloro-6-t-octylamino-s-tria zine polycondensate, 1,5,8,12-tetrakis[2,4-bis(N-butyl-N-(2,2,6,6-tetramethyl-4-piperidyl)amino)-s-triazin-6-yl]-1,5,8,12-tetraazadodecane, 1,5,8,12-tetrakis[2,4-bis(N-butyl-N-(1,2,2,6,6-pentamethyl-4-piperidyl)amino)-s-triazin -6-yl]-1,5,8,12-tetraazadodecane, 1,6,11-tris[2,4-bis(N-butyl-N-(2,2,6,6-tetramethyl-4-piperidyl)amino)-s-triazin-6-yl]aminoundecane, and 1,6,11-tris[2,4-bis(N-butyl-N-(1,2,2,6,6-pentamethyl-4-piperidyl)amino)-s-triazin-6-yl]aminoundecane. The hindered amine light stabilizer is usually added in an amount of 0.001 to 30 parts, preferably 0.05 to 10 parts, by weight per 100 parts by weight of the resin.

If desired, the flame-retardant resin composition of the present invention can contain silicon dioxide or a metal oxide. The metal oxide includes titanium oxide, zinc oxide, calcium oxide, magnesium oxide, calcium oxide, zirconium oxide, barium oxide, tin oxide, lead oxide, antimony oxide, molybdenum oxide, and cadmium oxide. Silicon oxide to be added may have been subjected to various surface treatments. Silicon dioxide (silica) includes dry silica and wet silica. Commercially available silica products include Aerosil from Nippon Aerosil Co., Ltd.; Reosil and Tokusil from Tokuyama Corp.; Carplex from Shionogi & Co., Ltd.; Sylicia from Fuji Silysia Chemical, Ltd.; and Mizukasil from Mizusawa Industrial Chemicals, Ltd. Preferred of these species are hydrophobic ones having a methyl group bonded to the surface, such as Aerosil R972, Aerosil R972V, Aerosil R972CF, and Aerosil R974 from Nippon Aerosil.

The silicon dioxide or metal oxide is usually added in an amount of 0.01 to 5 parts, preferably 0.05 to 3 parts, by weight per 100 parts by weight of the resin.

If desired, the flame-retardant resin composition of the present invention can further contain various additives. Useful additives include nucleating agents, such as aluminum p-t-butylbenzoate, aromatic phosphoric ester metal salts, and dibenzylidene sorbitols; antistatics, metal soaps, hydrotalcite, triazine ring-containing compounds, metal hydroxides, phosphate flame retardants, other inorganic phosphorus flame retardants, halogen flame retardants, silicone flame retardants, fillers, pigments, lubricants, and blowing agents.

The triazine ring-containing compounds include melamine, ammeline, benzoguanamine, acetoguanamine, phthalodiguanamine, melamine cyanurate, melamine pyrophosphate, butylenediguanamine, norbornenediguanamine, methylenediguanamine, ethylenedimelamine, trimethylenedimelamine, tetramethylenedimelamine, hexamethylenedimelamine, and 1,3-hexylenedimelamine.

The metal hydroxides include magnesium hydroxide, aluminum hydroxide, calcium hydroxide, barium hydroxide, and zinc hydroxide.

The flame-retardant resin composition of the present invention is not limited in use. For example, the flame-retardant polypropylene resin composition of the invention has a variety of applications as machine mechanical parts, electric or electronic parts, and automobile parts. Examples of applications include electric and electronic parts, such as gears, cases, sensors, LEP lamps, connectors, sockets, resistors, relay cases, switches, coil bobbins, condensers, variable condensers, light pickups, oscillators, terminal boards, transformers, plugs, printed wiring boards, tuners, speakers, microphones, headphones, small-sized motors, magnetic head bases, power modules, housings, semiconductor devices, liquid crystal devices, FDD carriages, FDD chassis, motor brush holders, parabolic antennas, and computer-related parts; domestic and office appliances, such as VTRs, TV sets, irons, hear driers, rice cookers, microwave ovens, audio-vidual media (e.g., laser discs and compact discs), lighting fixtures, refrigerators, air conditioners, typewriters, word processors, office computers, telephones, facsimiles, and copiers; machines-related parts, such as washing jigs, various bearings (e.g., oilless bearings, stern bearings, and submergible bearings), motors, lighters, and typewriters; optical equipment and precision machine-related parts, such as microscopes, binoculars, cameras, and watches; automobile parts, such as alternator terminals, alternator connectors, IC regulators, potentiometer bases, various valves (e.g., exhaust valves), fuel-, exhaust- or suction-related various pipes, air intake snorkels, intake manifolds, fuel pumps, engine cooling water joints, carburetor spacers, exhaust sensors, cooling water sensors, oil temperature sensors, brake pad wear sensors, air flow meters, AC thermostat bases, AC warm air flow control valves, brush holders for radiator motor, water pump impellers, turbine vanes, wiper motor-related parts, distributors, starter switches, starter relays, transmission wire harnesses, window washer nozzles, AC panel switch boards, coils for fuel-related electromagnetic valves, fuse connectors, horn terminals, insulators for electric parts and accessories, rotors for step motors, lamp sockets, lamp reflectors, lamp housings, brake pistons, solenoid bobbins, engine oil filters, and ignition unit cases; housings of personal computers, printers, displays, CRTs, facsimiles, copiers, word processors, notebook computers, and memories of DVD drives, PD drives or floppy disc drives; other molded articles; films; filaments; and fibers.

The present invention will now be illustrated in greater detail with reference to Examples, but it should be understood that the invention is not construed as being limited thereto. Unless otherwise noted, all the parts and percents are by weight.

### EXAMPLES 1 TO 13 AND COMPARATIVE EXAMPLES 1 TO 3

A polypropylene resin (PP) composition was prepared by compounding 100 parts of molding grade polypropylene (available from Mitsui Chemicals, Inc.) with 0.1 part of calcium stearate (lubricant), 0.1 part of tetrakis[methyl 3-(3,5-di-t-butyl-4-hydroxyphenyl)propionate]methane (phenol antioxidant), and 0.1 part of tris(2,4-di-t-butylphenyl) phosphite (phosphorus antioxidant). The PP composition was mixed with a flame retardant(s) and polytetrafluoroethylene (PTFE) as an anti-dripping agent according to Tables 1 to 3 below (the formulations in Tables are given by percent by weight), and the mixture was extruded at 200 to 230°C and pelletized. The resulting compound was injection molded at 220°C to prepare 1.6 mm thick specimens. The melamine pyrophosphate, the piperazine pyrophosphate and the melamine piperazine pyrophosphate in Tables were prepared at a melamine/pyrophosphoric acid molar ratio of 2/1, a piperazine/pyrophosphoric acid molar ratio of 1/1, and a melamine/piperazine/pyrophosphoric acid molar ratio of 1/1/1, respectively.

The specimens were subjected to UL-94V (vertical burn) test according to the following method. Further, the oxygen index was measured using the specimens. The results obtained are shown in Tables 1 to 3.

### UL Flammability 94V Test:

The specimen of 12.7 mm in width, 127 mm in length, and 1.6 mm in width was positioned vertically, and a test burner flame was applied to the lower end of the specimen for 10 seconds. After 10 seconds, the flame was removed, and the burning time (the time required to self-extinguish) was recorded. As soon as the flame extinguished, the flame was immediately applied for another 10 seconds. Again the burning time was recorded. Ignition of the cotton layer by any drips of flaming particles was also observed.

The burning time after each flame application and the ignition of the cotton layer were interpreted into a UL-94 flammability rating. The V-0 rating is the lowest flammability. The V-1 rating is less flame retardancy, and V-2 rating is still less flame retardancy. A specimen that was not interpreted into any of these ratings were rated "NR".

**TABLE 1**

| | Example No. | | | | | |
|---|---|---|---|---|---|---|
| | 1 | 2 | 3 | 4 | 5 | 6 |
| PP composition | 76.0 | 78.0 | 76.0 | 77.0 | 78.0 | 76.0 |
| Melamine pyrophosphate | 12.0 | 10.0 | 9.6 | 9.2 | 8.8 | 10.0 |
| Piperazine pyrophosphate | 12.0 | 12.0 | 14.4 | 13.8 | 13.2 | 10.0 |
| Ammonium polyphosphate | - | - | - | - | - | 4.0 |
| PTFE | 0.1 | 0.1 | 0.1 | 0.1 | 0.1 | 0.1 |
| UL-94V (1.6 mm t) | V-0 | V-0 | V-0 | V-0 | V-0 | V-0 |
| Oxygen index | 31.0 | 29.5 | 31.0 | 31.0 | 29.5 | 31.0 |

**TABLE 2**

| | Example No. | | | | | | |
|---|---|---|---|---|---|---|---|
| | 7 | 8 | 9 | 10 | 11 | 12 | 13 |
| PP composition | 78.0 | 78.0 | 76.0 | 76.0 | 72.0 | 76.0 | 80.0 |
| Melamine pyrophosphate | 8.0 | 7.0 | 9.6 | - | 14.0 | - | 8.0 |
| Melamine polyphosphate | - | - | - | 9.6 | - | - | - |
| Piperazine pyrophosphate | 14.0 | 15.0 | - | 14.4 | 14.0 | - | 12.0 |
| Piperazine (poly)phosphate¹⁾ | - | - | 14.4 | - | - | - | - |
| Melamine piperazine pyrophosphate | - | - | - | - | - | 17.0 | - |
| Ammonium polyphosphate | - | - | - | - | - | 7.0 | - |
| PTFE | 0.1 | 0.1 | 0.1 | 0.1 | 0.05 | 0.1 | 0.1 |
| SiO₂²⁾ | - | - | - | - | - | - | 0.2 |
| UL-94V (1.6 mm t) | V-0 | V-0 | V-0 | V-0 | V-0 | V-0 | V-0 |
| Oxygen index | 30.5 | 29.5 | 30.5 | 30.0 | 32.5 | 29.0 | 31.0 |

| | | | | | | | |
|---|---|---|---|---|---|---|---|
| 1) Pori-rinsan 107 from Nippon Chemical Industrial Co., Ltd., a reaction product between phosphoric acids (pyrophosphoric acid: 50%; orthophosphoric acid: 30%; triphosphoric acid: 15%; other polyphosphoric acids: 5%) and piperazine at a 1:1 molar ratio (calculated based on the average molecular weight). | | | | | | | |
| 2) Aerosil R972 from Nippon Aerosil Co., Ltd. | | | | | | | |

**TABLE 3**

| | Comparative Example No. | | |
|---|---|---|---|
| | 1 | 2 | 3 |
| PP composition | 100.0 | 76.0 | 76.0 |
| Melamine pyrophosphate | - | 12.0 | 24.0 |
| Piperazine pyrophosphate | - | 12.0 | - |
| PTFE | - | - | 0.1 |
| UL-94V (1.6 mm t) | NR | V-2 | NR |
| Oxygen index | 18.5 | 31.0 | 22.0 |

As is apparent from Tables 1 to 3, the compounds of Examples 1 through 13 comprising (A) a resin, (B) the specific phosphoric acid salt, and (C) PTFE were rated V-0 in the UL-94V test, whereas the compounds of Comparative Examples 1 to 3 failed to reach the V-0 level, i.e., did not exhibit sufficient flame retardancy.

## Claims

1. A flame-retardant resin composition comprising (A) a synthetic resin selected from the group consisting of polyolefin resins, linear polyesters and polyurethane, (B) (b1) a compound represented by formula (I) or (b2) a combination of a compound represented by formula (III) and a compound represented by formula (IV), and (C) fluorine resins, 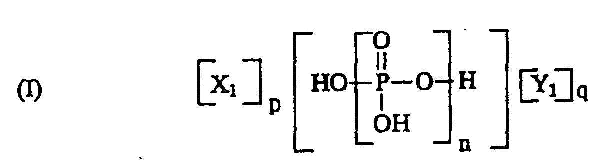 wherein n represents an integer of from 1 to 100; X₁ represents R₁R₂N(CH₂)ₘNR₃R₄, piperazine or a piperazine ring-containing diamine; R₁, R₂, R₃, and R₄, which may be the same or different, each represent a hydrogen atom or a straight-chain or branched alkyl group having 1 to 5 carbon atoms; m represents an integer of from 1 to 10; Y₁ represents an ammonia or a triazine derivative represented by formula (II); and p and q each represent a number satisfying relationships: 0<p≤n+2, 0<q≤n+2, and 0<p+q≤n+2, 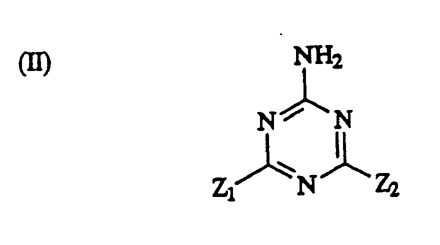 wherein Z₁ and Z₂, which may be the same or different, each represent an -NR₅R₆ group (wherein R₅ and R₆, which may be the same or different, each represent a hydrogen atom or a straight-chain or branched alkyl group having 1 to 6 carbon atoms or a methylol group), a hydroxyl group, a mercapto group, a straight-chain or branched alkyl group having 1 to 10 carbon atoms, a straight-chain or branched alkoxy group having 1 to 10 carbon atoms, a phenyl group or a vinyl group, 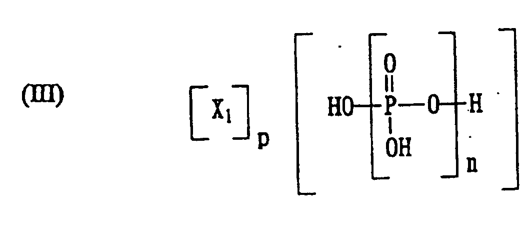 wherein X₁, p and n are as defined above, 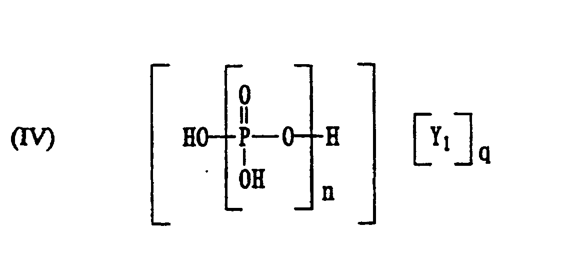 wherein Y₁, q, and n are as defined above, and
wherein the flame-retardant resin composition comprises 5 to 70 parts by weight of component (B) and 0.05 to 5 parts by weight of component (C) per 100 parts by weight of component (A).

2. The flame-retardant resin composition according to claim 1, which comprises 10 to 50 parts by weight of component (B) and 0.05 to 5 parts by weight of component (C) per 100 parts by weight of component (A).

3. The flame-retardant resin composition according to claim 1, which comprises 15 to 40 parts by weight of component (B) and 0.05 to 5 parts by weight of component (C) per 100 parts by weight of component (A).

4. The flame-retardant resin composition according to any one of claims 1 to 3, wherein component (b-2) is a combination of said phosphoric acid salt of formula (III) and said phosphoric acid salt of formula (IV) in a weight ratio, (III)/(IV), of from 40/60 to 80/20.

5. The flame-retardant resin composition according to any one of claims 1 to 3, wherein component (b-2) is a combination of said phosphoric acid salt of formula (III) and said phosphoric acid salt of formula (IV) in a weight ratio, (III)/(IV), of from 50/50 to 70/30.

6. The flame-retardant resin composition according to any one of claims 1 to 5, wherein component (A) is a polyolefin resin.

7. The flame-retardant resin composition according to claim 6, wherein said polyolefin resin is a polypropylene resin or a polyethylene resin.

8. The flame-retardant resin composition according to any one of claims 1 to 7, wherein component (b2) is a combination of a piperazine polyphosphate represented by formula (III) wherein p is 1, and X₁ is piperazine and a melamine polyphosphate represented by formula (IV) wherein q is 2, and Y₁ is melamine.

9. The flame-retardant resin composition according to claim 8, wherein said piperazine polyphosphate is piperazine pyrophosphate.

10. The flame-retardant resin composition according to claim 8 or 9, wherein said melamine polyphosphate is melamine pyrophosphate.

11. The flame-retardant resin composition according to any one of claims 1 to 10, wherein component (C) is polytetrafluoroethylene.

12. The flame-retardant resin composition according to any one of claims 1 to 11, which further comprises silicon dioxide or a metal oxide.

## Patentansprüche

1. Flammhemmende Harzzusammensetzung, umfassend (A) ein synthetisches Harz, ausgewählt aus der Gruppe, bestehend aus Polyolefinharzen, linearen Polyestern und Polyurethan, (B)(b1) eine durch Formel (I) dargestellte Verbindung, oder (b2) eine Kombination von einer durch Formel (III) dargestellten Verbindung, und einer durch Formel (IV) dargestellten Verbindung, und (C) Fluorharze, 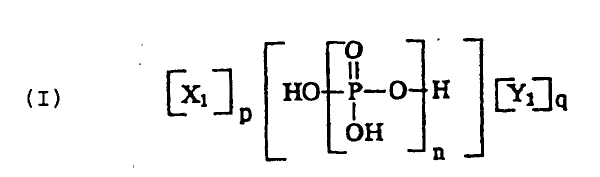 worin n eine ganze Zahl von 1 bis 100 bezeichnet; X₁ R₁R₂N(CH₂)ₘNR₃R₄, Piperazin oder ein Piperazinring-enthaltendes Diamin bezeichnet; R₁, R₂, R₃ und R₄, welche gleich oder verschieden sein können, jeweils ein Wasserstoffatom oder eine geradkettige oder verzweigte Alkylgruppe mit 1 bis 5 Kohlenstoffatomen bezeichnen; m eine ganze Zahl von 1 bis 10 bezeichnet; Y₁ ein Ammonium- oder ein durch Formel (II) dargestelltes Triazinderivat bezeichnet; und p und q jeweils eine Zahl bezeichnen, die folgende Beziehungen erfüllt: 0<p≤n+2, 0<q≤+2, und 0<p+q≤n+2, 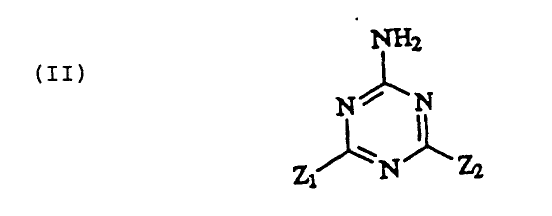 worin Z₁ und Z₂, welche gleich oder verschieden sein können, jeweils eine -NR₅R₆-Gruppe (worin R₅ und R₆, welche gleich oder verschieden sein können, jeweils ein Wasserstoffatom oder eine geradkettige oder verzweigte Alkylgruppe mit 1 bis 6 Kohlenstoffatomen oder eine Methylolgruppe repräsentieren), eine Hydroxylgruppe, eine Mercaptogruppe, eine geradkettige oder verzweigte Alkylgruppe mit 1 bis 10 Kohlenstoffatomen, eine geradkettige oder verzweigte Alkoxygruppe mit 1 bis 10 Kohlenstoffatomen, eine Phenylgruppe oder eine Vinylgruppe repräsentieren, 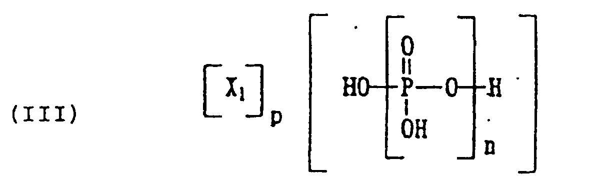 worin X₁, p und n wie oben definiert sind, 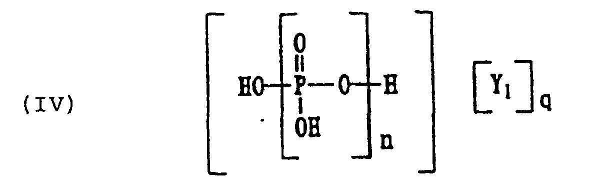 worin Y₁, q und n wie oben definiert sind, und worin die flammhemmende Harzzusammensetzung 5 bis 70 Gewichtsteile von Bestandteil (B) und 0,05 bis 5 Gewichtsteile von Bestandteil (C) pro 100 Gewichtsteile von Bestandteil (A) umfasst.

2. Flammhemmende Harzzusammensetzung gemäß Anspruch 1, welche 10 bis 50 Gewichtsteile von Bestandteil (B) und 0,05 bis 5 Gewichtsteile von Bestandteil (C) pro 100 Gewichtsteile von Bestandteil (A) umfasst.

3. Flammhemmende Harzzusammensetzung gemäß Anspruch 1, welche 15 bis 40 Gewichtsteile von Bestandteil (B) und 0,05 bis 5 Gewichtsteile von Bestandteil (C) pro 100 Gewichtsteile von Bestandteil (A) umfasst.

4. Flammhemmende Harzzusammensetzung gemäß einem der Ansprüche 1 bis 3, worin Bestandteil (b-2) eine Kombination des Phosphorsäuresalzes der Formel (III) und des Phosphorsäuresalzes der Formel (IV) in einem Gewichtsverhältnis (III)/(IV) von 40/60 bis 80/20 ist.

5. Flammhemmende Harzzusammensetzung gemäß einem der Ansprüche 1 bis 3, worin Bestandteil (b-2) eine Kombination des Phosphorsäuresalzes der Formel (III) und des Phosphorsäuresalzes der Formel (IV) in einem Gewichtsverhältnis (III)/(IV) von 50/50 bis 70/30 ist.

6. Flammhemmende Harzzusammensetzung gemäß einem der Ansprüche 1 bis 5, worin Bestandteil (A) ein Polyolefinharz ist.

7. Flammhemmende Harzzusammensetzung gemäß Anspruch 6, worin das Polyolefinharz ein Polypropylenharz oder ein Polyethylenharz ist.

8. Flammhemmende Harzzusammensetzung gemäß einem der Ansprüche 1 bis 7, worin Bestandteil (b2) eine Kombination eines Piperazinpolyphoshats, dargestellt durch Formel (III), worin p 1 ist, und X₁ Piperazin ist, und eines Melaminpolyphospats, dargestellt durch Formel (IV), worin q 2 ist und Y₁ Melamin ist, ist.

9. Flammhemmende Harzzusammensetzung gemäß Anspruch 8, worin das Piperazinpolyphoshat Piperazinpyrophosphat ist.

10. Flammhemmende Harzzusammensetzung gemäß einem der Ansprüche 8 oder 9, worin das Melaminpolyphosphat Melaminpyrophosphat ist.

11. Flammhemmende Harzzusammensetzung gemäß einem der Ansprüche 1 bis 10, worin Bestandteil (C) Polytetrafluorethylen ist.

12. Flammhemmende Harzzusammensetzung gemäß einem der Ansprüche 1 bis 11, welche weiter Siliziumdioxid oder ein Metalloxid umfasst.

## Revendications

1. Composition de résine ignifuge comportant (A) une résine synthétique sélectionnée parmi le groupe constitué de résines polyoléfine, de polyesters linéaires et de polyuréthanne, (B) (b1) un composé représenté par la formule (I) ou (b2) une combinaison d'un composé représenté par la formule (III) et d'un composé représenté par la formule (IV), et (C) des résines fluorées, 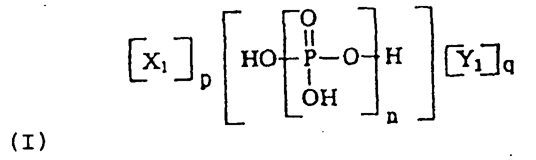 où n représente un nombre entier de 1 à 100, X₁ représente R₁R₂N(CH₂)ₘNR₃R₄, une pipérazine ou une diamine contenant un anneau pipérazine, R₁, R₂, R₃ et R₄, qui peuvent être identiques ou différents, représentent chacun un atome d'hydrogène ou un groupe alkyle à chaîne rectiligne ou ramifié ayant 1 à 5 atomes de carbone, m représente un nombre entier de 1 à 10, Y₁ représente un ammoniac ou un dérivé de triazine représenté par la formule (II), et p et q représentent chacun un nombre satisfaisant aux relations suivantes : 0 < p ≤ n + 2, 0 < q ≤ n + 2, et 0 < p + q ≤ n + 2, 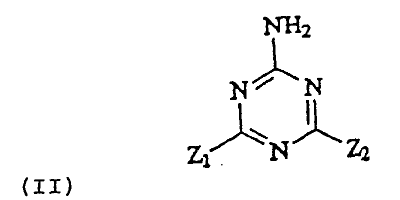 où Z₁ et Z₂, qui peuvent être identiques ou différents, représentent chacun un groupe -NR₅R₆ (où R₅ et R₆, qui peuvent être identiques ou différents, représentent chacun un atome d'hydrogène ou un groupe alkyle à chaîne rectiligne ou ramifié ayant 1 à 6 atomes de carbone ou un groupe méthylol), un groupe hydroxyle, un groupe mercapto, un groupe alkyle à chaîne rectiligne ou ramifié ayant 1 à 10 atomes de carbone, un groupe alkoxy à chaîne rectiligne ou ramifié ayant 1 à 10 atomes de carbone, un groupe phényle ou un groupe vinyle, 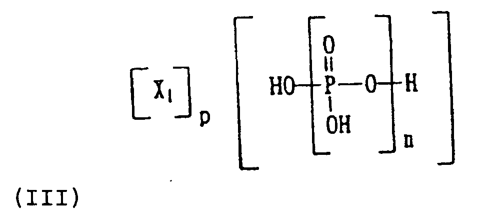 où X₁, p et n sont comme défini ci-dessus, 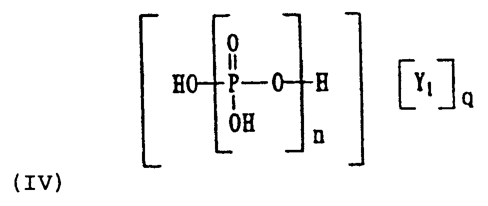 où Y₁, q, et n sont comme défini ci-dessus, et
dans laquelle la composition de résine ignifuge comporte 5 à 70 parties en poids du composant (B) et 0,05 à 5 parties en poids du composant (C) pour 100 parties en poids du composant (A).

2. Composition de résine ignifuge selon la revendication 1, qui comporte 10 à 50 parties en poids du composant (B) et 0,05 à 5 parties en poids du composant (C) pour 100 parties en poids du composant (A).

3. Composition de résine ignifuge selon la revendication 1, qui comporte 15 à 40 parties en poids du composant (B) et 0,05 à 5 parties en poids du composant (C) pour 100 parties en poids du composant (A).

4. Composition de résine ignifuge selon l'une quelconque des revendications 1 à 3, dans laquelle le composant (b-2) est une combinaison dudit sel d'acide phosphorique de la formule (III) et dudit sel d'acide phosphorique de la formule (IV) selon un rapport en poids, (III)/(IV), allant de 40/60 à 80/20.

5. Composition de résine ignifuge selon l'une quelconque des revendications 1 à 3, dans laquelle le composant (b-2) est une combinaison dudit sel d'acide phosphorique de la formule (III) et dudit sel d'acide phosphorique de la formule (IV) selon un rapport en poids, (III)/(IV), allant de 50/50 à 70/30.

6. Composition de résine ignifuge selon l'une quelconque des revendications 1 à 5, dans laquelle le composant (A) est une résine polyoléfine.

7. Composition de résine ignifuge selon la revendication 6, dans laquelle ladite résine polyoléfine est une résine polypropylène ou une résine polyéthylène.

8. Composition de résine ignifuge selon l'une quelconque des revendications 1 à 7, dans laquelle le composant (b2) est une combinaison d'un polyphosphate de pipérazine représenté par la formule (III) où p est égal à 1, et X₁ est une pipérazine et d'un polyphosphate de mélamine représenté par la formule (IV) où q est égal à 2, et Y₁ est une mélamine.

9. Composition de résine ignifuge selon la revendication 8, dans laquelle ledit polyphosphate de pipérazine est un pyrophosphate de pipérazine.

10. Composition de résine ignifuge selon la revendication 8 ou 9, dans laquelle ledit polyphosphate de mélamine est un pyrophosphate de mélamine.

11. Composition de résine ignifuge selon l'une quelconque des revendications 1 à 10, dans laquelle le composant (C) est un polytétrafluoroéthylène.

12. Composition de résine ignifuge selon l'une quelconque des revendications 1 à 11, qui comporte de plus un dioxyde de silicium ou un oxyde métallique.
